**Europäisches Patentamt**

**European Patent Office**

**Office européen des brevets**

(19)

(11) Numéro de publication : **0 496 646 A1**

## (12) DEMANDE DE BREVET EUROPEEN

(21) Numéro de dépôt : **92400047.4**

(22) Date de dépôt : **08.01.92**

(51) Int. Cl.⁵ : **B22D 11/06, C04B 35/66, C04B 35/80**

Revendications modifiées conformément à la règle 86 (2) CBE.

(30) Priorité : **25.01.91 FR 9101061**

(43) Date de publication de la demande : **29.07.92 Bulletin 92/31**

(84) Etats contractants désignés :
**AT BE CH DE DK ES FR GB GR IT LI LU NL PT SE**

(71) Demandeur : **USINOR SACILOR**
**4 Place de la Pyramide, La Défense 9**
**F-92800 Puteaux (FR)**

(71) Demandeur : **Thyssen Stahl Aktiengesellschaft**
**Kaiser-Wilhelm-Strasse 100**
**W-4100 Duisburg 11 (DE)**

(71) Demandeur : **Thyssen Edelstahlwerke AG**
**Oberschlesienstrasse 16**
**W-4150 Krefeld 1 (DE)**

(72) Inventeur : **Tavernier, Hervé**
**1, rue Parisot**
**F-57000 Metz (FR)**
Inventeur : **Ganser, Christophe**
**12, rue St Exupery**
**F-57290 Fameck (FR)**

(74) Mandataire : **Martin, Jean-Paul et al**
**c/o CABINET LAVOIX 2, Place d'Estienne d'Orves**
**F-75441 Paris Cedex 09 (FR)**

(54) **Petite face d'une installation de coulée continue des métaux entre cylindres.**

(57)    Selon l'invention, la petite face comporte une couche au contact du métal en fusion constituée d'un matériau réfractaire de structure fibreuse et composé principalement d'alumine et de silice, une seconde couche étant prévue derrière, en réfractaire compact. La couche fibreuse assure l'isolation thermique, la couche compact sert de plaque de sécurité.

L'invention permet la réalisation de petites faces aptes à la fois à assurer durablement l'étanchéité au métal en fusion et à empêcher des solidifications intempestives de ce métal à leur contact.

L'invention s'appliquer préférentiellement à la coulée continue entre cylindres des métaux durs et à température de fusion élevée tels que le fer et ses alliages.

EP 0 496 646 A1

L'invention concerne la coulée continue entre cylindres des métaux, notamment l'acier.

On sait que l'une des principales difficultés actuelles de mise en oeuvre de cette technique pour la coulée des métaux durs et à température de fusion élevée, comme le fer et ses alliages, réside dans l'obturation des extrémités de l'espace de coulée définie par les cylindres.

Les éléments d'obturation utilisables à cette fin, plus communément appelés "petites faces", doivent en effet être à la fois aptes à assurer durablement l'étanchéité au métal en fusion et à empêcher des solidifications intempestives de ce même métal à leur contact.

Les petites faces en matériau réfractaires proposées dans la littérature disponible remplissent encore trop imparfaitement cette double exigence (FR-A-2613646, JP-A-579565).

L'invention vise à une réponse décisive à ce problème.

A cet effet, l'invention a pour objet une petite face d'obturation des extrémités de l'espace de coulée d'une installation de coulée continue entre cylindres des métaux, comportant une partie au contact du métal coulé constituée d'un matériau réfractaire, caractérisée en ce que ce matériau se présente sous une structure fibreuse et en ce qu'il est composé principalement d'alumine et de silice à raison respectivement de 70 à 98 % et 30 à 2 % en poids environ.

Avantageusement, dans le cas de la coulée d'aciers inoxydables, ledit matériau réfractaire est imprégné par un gel à base de zircone.

L'invention a également pour objet une petite face de ce type, la partie réfractaire étant constituée de deux couches juxtaposées, caractérisée en ce que la première couche, destinée à venir au contact du métal coulé, est constituée d'un matériau réfractaire fibreux, tel que prémentionné, présentant des propriétés élevées d'isolant thermique, et en ce que la seconde couche, destinée à assurer la rigidité et la résistance mécanique de l'ensemble, est formée par un matériau réfractaire compact présentant des propriétés de dilatation thermique réduites.

Comme on l'aura compris, au démarrage d'une coulée, la couche de réfractaire fibreux riche en $Al_2O_3$ assure à l'état neuf, c'est-à-dire ayant toute usure, l'isolation thermique qui permet d'éviter les solidifications intempestives de métal coulé sur les petites faces.

On rappelle que ces solidifications parasites lorsqu'elles surviennent constituent des ponts qui relient, en amont du col entre les cylindres, les extrémités des peaux solidifiées sur ces derniers. Il peut ainsi se former de véritables coins bloquants, incapables en raison de leur dureté de passer entre les cylindres, ce qui conduit à brève échéance à l'interruption définitive de l'opération de coulée.

Ensuite, au cours de la phase initiale de la coulée, la couche fibreuse se creuse par érosion mécanique du métal coulée. Elle perd alors progressivement de ses propriétés thermo-isolantes. Cependant la petite face se met conjointement en régime thermique. Lorsque cet équilibre est atteint, et entretenu par l'apport permanent de métal en fusion à couler, les solidifications ne sont plus à craindre. Si l'épaisseur initiale de la couche fibreuse est prévue suffisante pour ne pas être traversée à ce moment là, l'usure est stabilisée et l'opération de coulée peut se poursuivre jusqu'à son terme sans difficulté particulière.

Cela étant, la couche de réfractaire compact à l'arrière du fibreux constitue avantageusement à cet égard une plaque de sécurité qui permet au besoin de contenir le métal liquide si la coulée se prolonge au delà de l'érosion complète du fibreux.

Etant donné que, de préférence, une enveloppe métallique protège la partie réfractaire et améliore la tenue mécanique de l'ensemble, la couche compacte sera avantageusement choisie dans un matériau réfractaire à faible dilatation thermique, comme de la silice vitreuse fondue, ou un béton alumineux.

Dans le cas de la coulée des inox, on aura avantage d'imprégner le fibreux par de la zircone, comme connu en soi, afin d'améliorer sa tenue à la corrosion. Après imprégnation, la teneur en $ZrO_2$ peut varier de 15 à 70 % en poids.

## Revendications

**1)** Petite face d'obturation des extrémités de l'espace de coulée d'une installation de coulée continue entre cylindres des métaux, comportant une partie au contact du métal coulé constituée d'un matériau réfractaire, caractérisée en ce que ce matériau se présente sous une structure fibreuse et en ce qu'il est composé principalement d'alumine et de silice à raison respectivement et relativement de 70 à 98 % et 30 à 2 % en poids environ.

**2)** Petite face selon la revendication 1, caractérisée en ce que le matériau est en outre imprégné par un gel à base de zircone.

**3)** Petite face d'obturation des extrémités de l'espace de coulée d'une installation de coulée continue entre cylindres des métaux et ayant une partie réfractaire constituée de deux couches juxtaposées, caractérisée en ce que la première couche, destinée à être mise au contact du métal coulé, est formée par un réfractaire fibreux, présentant des propriétés élevées d'isolant thermique, et en ce que la seconde couche destinée à assurer la rigidité et la résistance de ladite partie réfractaire est formée par un matériau réfractaire compact présentant des propriétés de dilatation thermique réduite.

**4)** Petite face selon la revendication 3, caractérisée en ce que le réfractaire fibreux est composé d'alumine et de silice à raison respectivement et relativement de 70 à 98 % et de 30 à 2 % en poids.

**5)** Petite face selon la revendication 3, caractérisée en ce que ledit matériau réfractaire compact est de la silice vitreuse fondue.

**6)** Petite face selon la revendication 3, caractérisée en ce que ledit réfractaire compact est un béton silico alumineux.

EP 0 496 646 A1

## Office européen des brevets

## RAPPORT DE RECHERCHE EUROPEENNE

Numero de la demande

EP    92 40 0047

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | PATENT ABSTRACTS OF JAPAN vol. 9, no. 330 (M-442)(2053) 25 Décembre 1985 & JP-A-60 162 557 ( MITSUBISHI JUKOGYO K.K. ) 24 Août 1985 * abrégé * | 1,3,4 | B22D11/06 C04B35/66 C04B35/80 |
| Y | PATENT ABSTRACTS OF JAPAN vol. 14, no. 237 (M-097)21 Mai 1990 & JP-A-2 063 669 ( KITAGAWA IRON WORKS CO LTD ) 2 Mars 1990 * abrégé * | 1,3,4 | |
| Y | DE-A-3 230 107 (BRÜCKNER R.) * page 7, ligne 1 - page 9, ligne 14 * | 1,3,4 | |
| A | EP-A-0 279 673 (KERAMONT RESEARCH CORP.) * revendications 1-10 * | 2 | |
| A | PATENT ABSTRACTS OF JAPAN vol. 10, no. 323 (M-531)(2379) 5 Novembre 1986 & JP-A-61 129 260 ( KAWASAKI STEEL CORP. ) 17 Juin 1986 * abrégé * | 3,4 | DOMAINES TECHNIQUES RECHERCHES (Int. Cl.5) B22D C04B |

Le présent rapport a été établi pour toutes les revendications

| Lieu de la recherche | Date d'achèvement de la recherche | Examinateur |
|---|---|---|
| LA HAYE | 13 AVRIL 1992 | MAILLIARD A.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P0402)

4